# EUROPÄISCHE PATENTSCHRIFT

(11) **EP 0 759 510 B1**
(45) Veröffentlichungstag und Bekanntmachung des Hinweises auf die Patenterteilung: **29.03.2000**
(21) Anmeldenummer: 96113103.4
(22) Anmeldetag: 14.08.1996
(51) Int. Cl.: F16B 37/06, B23P 19/06

(54) **Hohlkörperelement, Matrize zur Anwendung mit dem Hohlkörperelement, Verfahren zur Anbringung des Hohlkörperelementes an ein plattenförmiges Bauteil und Zusammenbauteil**
Hollow product, die for its use, method for the attachment of the hollow product to a plate-shaped element and mounting assembly
Corps creux, matrice pour le corps creux, méthode pour la fixation d'un corps creux sur un élément en forme plate et ensemble de montage

(30) Priorität: 18.08.1995 DE 19530466
(43) Veröffentlichungstag der Anmeldung: 26.02.1997
(60) Teilanmeldung: 99115892.4
(73) Patentinhaber: PROFIL-Verbindungstechnik GmbH & Co. KG, 61381 Friedrichsdorf (DE)
(72) Erfinder: Müller, Rudolf, R.M., 6000 Frankfurt (DE)
(74) Vertreter: Morgan, James G.

(56) Entgegenhaltungen:
- EP-A- 0 041 593
- EP-A- 0 437 011
- DE-A- 2 545 581
- DE-A- 3 149 408
- FR-A- 2 598 189
- US-A- 4 637 766

## Beschreibung

Die vorliegende Erfindung betrifft ein Hohlkörperelement nach dem Oberbegriff von Anspruch 1, eine Matrize zur Anwendung mit einem Hohlkörperelement, ein Verfahren zur Anbringung des Hohlkörperelementes an ein plattenförmiges Bauteil nach dem Oberbegriff des Anspruches 8 und das sich nach Durchführung des Verfahrens ergebende Zusammenbauteil nach dem Oberbegriff des Anspruches 9.

Ein Hohlkörperelement nach dem Oberbegriff des Anspruches 1 ist aus der EP-A-0 553 822 A1 bzw. aus der entsprechenden US-A-5 340 251 bekannt. Ähnliche Hohlkörperelemente sind außerdem aus der US-A-3 234 987, der US-A-3 648 747 oder der US-A-3 253 631 bekannt.

Alle diese bekannten Ausführungsformen haben ein sogenanntes Pilotteil, das heißt, daß die ringförmige Vertiefung an der dem Bauteil zugewandten Stirnfläche auf der radial inneren Seite durch einen vorstehenden sich ebenfalls zumindest im wesentlichen bis zu der Stirnfläche vorragenden zylinderförmigen Pilotteil begrenzt ist.

Solche Hohlkörperelemente die im Regelfall als Mutterelemente ausgebildet werden, die aber auch beispielsweise eine einfache Zylinderbohrung zur Aufnahme eines Zapfens oder dergleichen aufweisen konnten, bieten eine verhältnismäßig hohe Verdrehsicherheit, so daß beim Einschrauben eines Bolzenelementes die Hohlkörperelemente fest an dem Bauteil verankert bleiben, und darüber hinaus einen relativ hohen Auspresswiderstand.

Es hat sich aber herausgestellt, daß im Betrieb unter Wechselbelastungen die Elemente manchmal aus dem plattenförmigen Bauteil (üblicherweise ein Blech) herausreißen. Auch ist die Herstellung solcher Hohlkörperelemente relativ aufwendig und es liegt ein Problem, der Gestalt vor, daß die Anlagefläche häufig nicht ausreichend ist und des weiteren, daß die radialen Abmessungen der eingebauten Elemente die Verwendung einer relativ großen Scheibe auf der Bolzenseite erforderlich machen um die Kräfte in der erwünschten Weise zu übertragen.

Die Hinterschneidung in der Seitenwand der ringförmigen Vertiefung, welche zur Erzeugung des geforderten Auspresswiderstandes des Hohlkörpers erforderlich ist, wird üblicherweise dadurch erzeugt, daß das Hohlkörperelement einem Quetschvorgang am umlaufenden Außenmantel unterzogen wird, wodurch die Seitenwand der ringförmigen Vertiefung von einer zunächst axial parallelen Lage in eine Schräglage gebracht wird wodurch die Öffnung zu der ringförmigen Vertiefung zwischen dem Pilotteil und der jetzt geneigten Seitenwand im Vergleich zu der Bodenfläche der Vertiefung verkleinert wird. Durch diese Quetschbewegung weist das Hohlkörperelement aber auch eine Schrägfläche an der äußeren Mantelfläche benachbart zu der dem Bauteil zugewandten Stirnfläche auf. Bei der Anbringung an das plattenförmige Bauteil wird die dem plattenförmigen Bauteil zugewandte keilförmige Auflagefläche häufig so verformt, daß sie unter Belastung messerartig wirkt und sich eine hohe Flächenpressung zwischen dem Bauteil und dem Hohlkörperelement ergibt.

Aufgrund dieser hohen Flächenpressung gibt das plattenförmige Bauteil nach wenigen Betriebsstunden nach und sitzt nicht mehr so fest wie erwünscht, so daß die Gefahr des Setzens und,, des Reduzierens der Vorspannkraft auf Null zu und damit das Versagen von der Schraubverbindung besteht.

Der vorliegenden Erfindung liegt die Aufgabe zugrunde hier Abhilfe zu schaffen und ein Hohlkörperelement, insbesondere ein Mutterlement vorzusehen, das einerseits preisgünstig herstellbar ist andererseits aber nicht nur eine gute Verdrehsicherung und einen festen Sitz nach seiner Anringung an das plattenförmige Bauteil sicherstellt, sondern darüber hinaus auch bei Wechselbelastung den festen Sitz beibehält ohne aus dem plattenförmigen Bauteil herausgerissen zu werden und ohne daß eine Lockerung des verwendeten Bolzenelementes zu befürchten ist, wobei die ringförmige Auflagefläche im Vergleich zu den bisherigen Lösungen im Durchmesser kleiner werden jedoch flächenmäßig ausreichend groß sein soll, damit eine unerwünscht hohe Flächenpressung am plattenförmigen Bauteil nicht auftritt.

Zur Lösung dieser Aufgabe wird erfindungsgemäß vorgesehen, daß die Bodenfläche der ringförmigen Vertiefung zumindest im wesentlichen ohne ein Pilotteil sich bis zum Durchgang der Bohrung erstreckt.

Das Pilotteil, das bei den bisher erwähnten Mutterelementen eine zentrale Rolle bei der Umformung des plattenförmigen Bauteils in die ringförmige Vertiefung spielte, wird somit jetzt fortgelassen, so daß die radialen Abmessungen des Mutterelementes in etwa um die Wanddickenabmessungen der üblichen Pilotteile reduziert werden können, wodurch der Innendurchmesser der ringförmigen Anlagefläche wesentlich kleiner wird. Dies bietet aber auch die Möglichkeit den äußeren Durchmesser der ringförmigen Anlagefläche im Vergleich zu dem Innendurchmesser so zu gestalten, daß die radiale Breite der ringförmigen Anlagefläche größer wird, wodurch insgesamt eine im Vergleich zu den bekannten Hohlkörperelementen vergrößerte Ringfläche vorliegt und hierdurch im Betrieb die Flächenpressung herabgesetzt werden kann.

Aufgrund der geänderten Abmessungen kann auch die Notwendigkeit zur Verwendung einer Scheibe auf der Bolzenseite entfallen.

Um dieses Hohlkörperelement zu verwenden, ist eine Modifikation der Matrize und des Setzkopfes notwendig um die bisher vom Pilotteil erfüllten Funktionen auf andere Art und Weise zu erbringen.

Beim Stand der Technik diente das Pilotteil einerseits als Lochstanze um bei der Anbringung des Hohlkörperelementes an einem Blechteil in Zusammenarbeit mit einer Matrize einen Butzen aus dem Blechteil herauszustanzen. Diese Stanzfunktion wird nunmehr mittels eines im Setzkopf koaxial zum Hohlkörperelement geführten Lochstempels erreicht der bei der Schließbewegung des Setzkopfes sich durch die Bohrung des Hohlkörperelementes hindurchbewegt und in Zusammenarbeit mit der Matrize für die Ausstanzung des Butzens sorgt.

Ein solcher Lochstempel ist zwar bekannt, beispielsweise aus dem deutschen Patent 34 46 978, oder aus der DE-OS 38 35 566.3, jedoch wird der Lochstempel hier mit einem anders gestalteten Hohlkörperelement verwendet das sozusagen auch ein Pilotteil aufweist in Form eines sogenannten Nietabschnittes. Somit liegt die Anwendung eines Lochstempels mit einem Mutterelement ohne Pilotteil nicht nah.

Eine andere Funktion des Pilotteils bei den Hohlkörperelementen nach dem eingangs genannten Stand der Technik lag darin das Metall des Bleches in die Hinterschneidung hinein zu formen um hierdurch die Sicherheit gegen Auspressung und zusätzlich auch die Verdrehsicherheit zu erzeugen. Auch diese Funktion wird nach der vorliegenden Erfindung von der Matrize übernommen und anders als bisher gelöst.

Zur Erzeugung der Verdrehsicherung bei dem erfindungsgemäßen Hohlkörperelement werden in der ringförmigen Anlagefläche eine Anzahl von Vertiefungen eingepreßt. Die Matrize für das Einsetzen des Mutterlementes weist mehrere Nasen auf die sicherstellen, daß das Material des plattenförmigen Bauteils in mindestens eine der Vertiefungen und vorzugsweise in mehrere der Vertiefungen hineingepreßt wird und hierdurch eine Verdrehsicherung erzeugt. Es können beispielsweise acht Vertiefungen in der ringförmigen Anlagefläche vorgesehen werden und sechs Nasen auf der Matrize, wodurch unabhängig von der jeweiligen Rotationsstellung des Hohlkörpers mindestens eine der Nasen einer Vertiefung gegenüberliegt.

Durch die Verwendung von Vertiefungen in der ringförmigen Auflagefläche wird während des Einpresens der Vertiefungen Hinterschneidungen an der Seitenwand der ringförmig Vertiefung im Hohlkörperelement gleichzeitig erzeugt und zwar in Form von lokalen wulstartigen Verformungen der Seitenwand.

Bei dem Fügevorgang wird das Blech in die so gebildeten Hinterschneidungen gepreßt, was einerseits den erforderlichen Auspresswiderstand sicherstellt andererseits aber auch eine zusätzliche Verdrehsicherung bildet.

Dadurch, daß die Hinterschneidungen während der Einbringung der Vertiefungen in der ringförmigen Anlagefläche des Hohlkörperelementes entstehen und nicht durch eine Quetschbewegung an der Mantelfläche des Hohlkörperelementes erzeugt werden müssen, fehlt bei dem Hohlkörperelement die ausgeprägte Fase die bei Hohlkörperelementen nach der eingangs genannten EP-A-0 553 822 oder nach der europäischen Patentanmeldung 95 102 794.5 entstehen. Dies ist aber von Vorteil, da es dann möglich ist, der Übergang von der ringförmigen Anlagefläche in die Mantelfläche des Hohlkörperelementes mit lediglich einem kleinen Radius beispielsweise unter 0,5 mm auszubilden, wodurch die verfügbare Fläche der ringförmigen Auflagefläche im Vergleich zum Stand der Technik erhöht werden kann.

Weitere bevorzugte Ausführungsformen des Anmeldungsgegenstandes sind den weiteren Unteransprüchen zu entnehmen. Die erfindungsgemäße Matrize zur Anwendung mit dem Hohlkörperelement ist im Anspruch 7 des Verfahrens zur Anbringung des Hohlkörperelementes an ein plattenförmiges Bauteil im Anspruch 8 angegegeben. Das sich hierdurch ergebende Zusammenbauteil ist dem Anspruch 9 zu entnehmen.

Die Erfindung wird nachfolgend anhand von Ausführungsbeispielen unter Bezugnahme auf die Zeichnung näher erläutert, in welchen zeigen:
- Fig. 1: eine Draufsicht auf der Stirnseite eines erfindungsgemäßen Hohlkörperelementes, wobei der Einfachheit halber lediglich die Hälfte des Hohlkörperelementes gezeigt wird,
- Fig. 2: eine teilweise geschnittene Seitenansicht der erfindungsgemäßen Hohlkörperelementes der Fig. 1,
- Fig. 3: eine schematische Darstellung der ersten Phase eines erfindunsgemäßen Verfahrens zur Anbringung des Hohlkörperelementes nach Fig. 1 und 2 an ein plattenförmiges Bauteil,
- Fig. 4: eine spätere Phase des erfindungsgemäßen Verfahrens kurz vor der Lochung des plattenförmigen Bauteiles,
- Fig. 5: eine spätere Phase des erfindungsgemäßen Verfahrens gerade nach der Lochung des plattenförmigen Bauteiles,
- Fig. 6: eine noch spätere Phase des erfindungsgemäßen Verfahrens bei der Umformung des plattenförmigen Bauteiles,
- Fig. 7, 7A: das Ende des erfindungsgemäßen Verfahrens nach der Anbringung des Hohlkörperelementes an das plattenförmige Bauteil, wobei die Fig. 7A die Anordnung der Matrize im unteren Werkzeug zeigt,
- Fig. 8: eine teilweise geschnittene Seitenansicht des Zusammenbauteils bestehend aus dem erfindungsgemäßen Hohlkörperelement und einem Blechteil,
- Fig. 9: eine etwas abgewandelte Ausführungsform des Hohlkörperelementes der Fig. 1 in einer Darstellung entsprechend der Fig. 2,
- Fig. 10: eine weitere mögliche Abwandlung des Hohlkörperelementes der Fig. 1 ebenfalls in einer Darstellung entsprechend der Fig. 2,
- Fig. 11: eine Draufsicht auf der Anlagefläche des Hohlkörperelementes der Fig. 10 und
- Fig. 12: eine weitere Darstellung einer möglichen Ausführungsvariante des Hohlkörperelementes in der Fig. 1 wiederum in eine Darstellung entsprechend der Fig. 2.

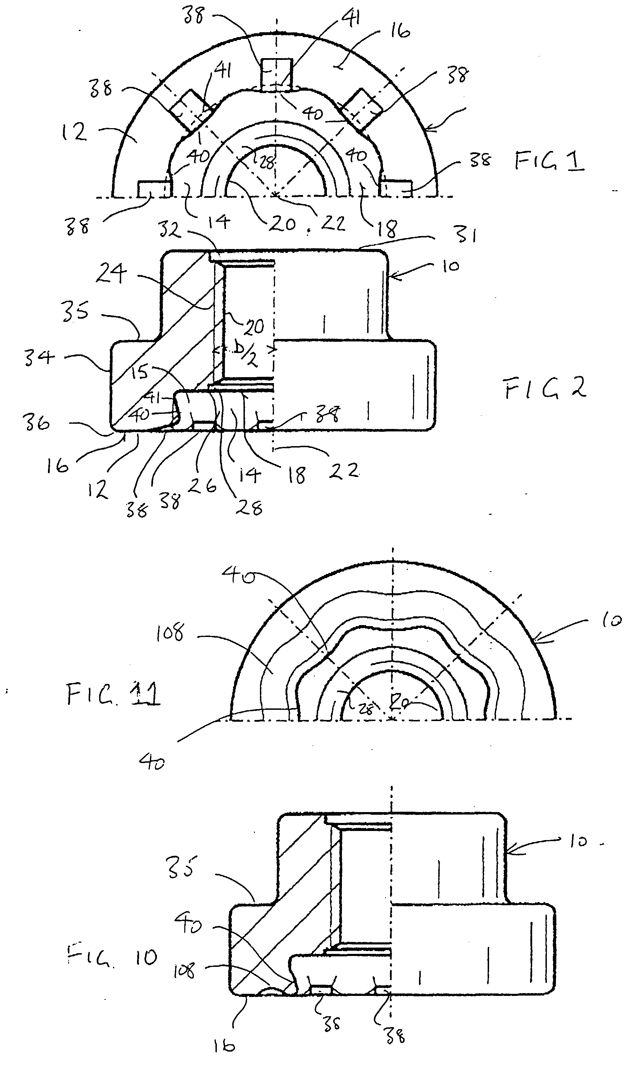

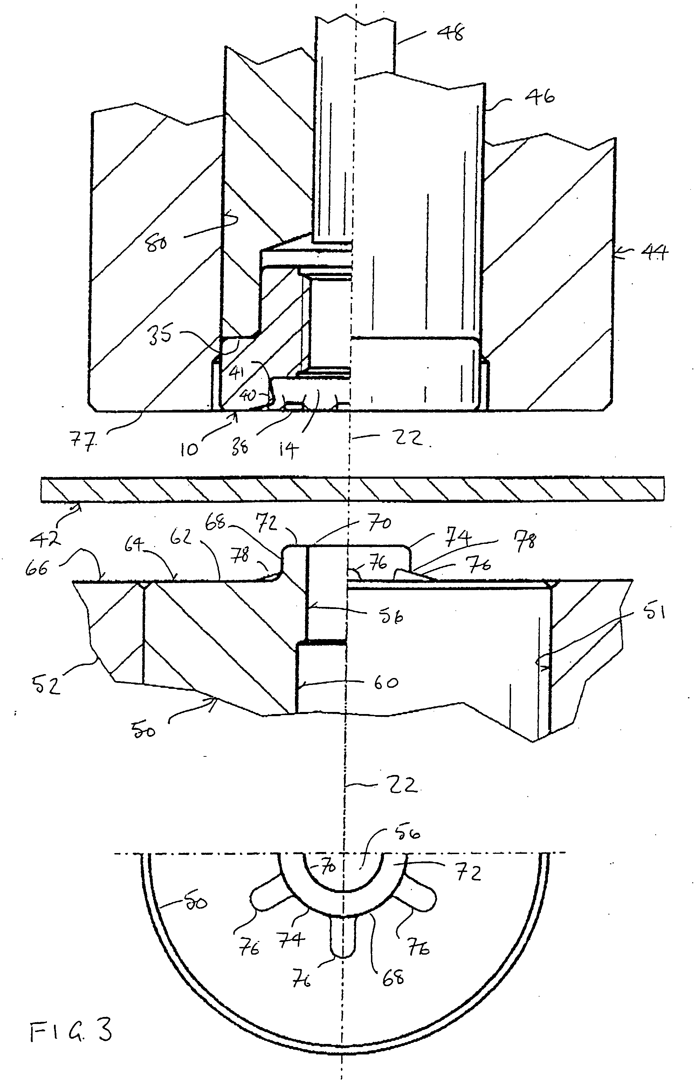

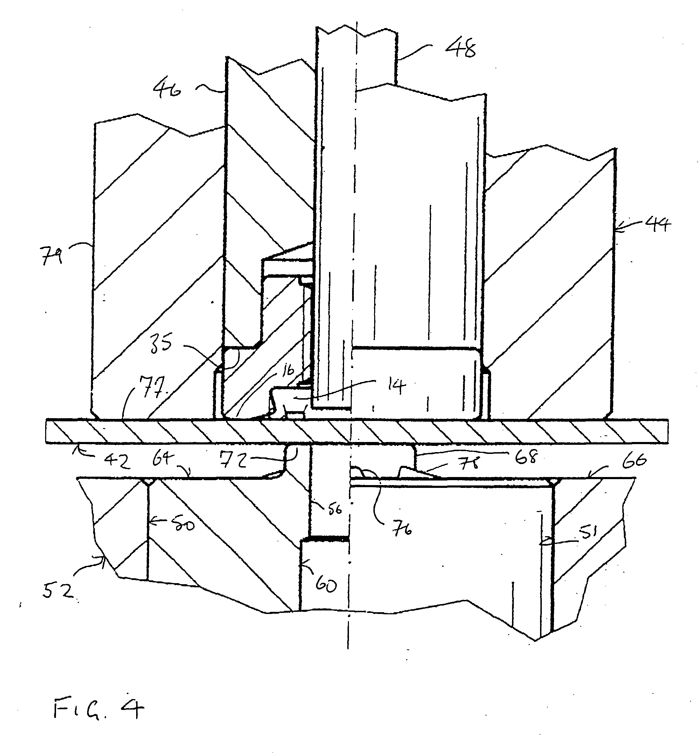

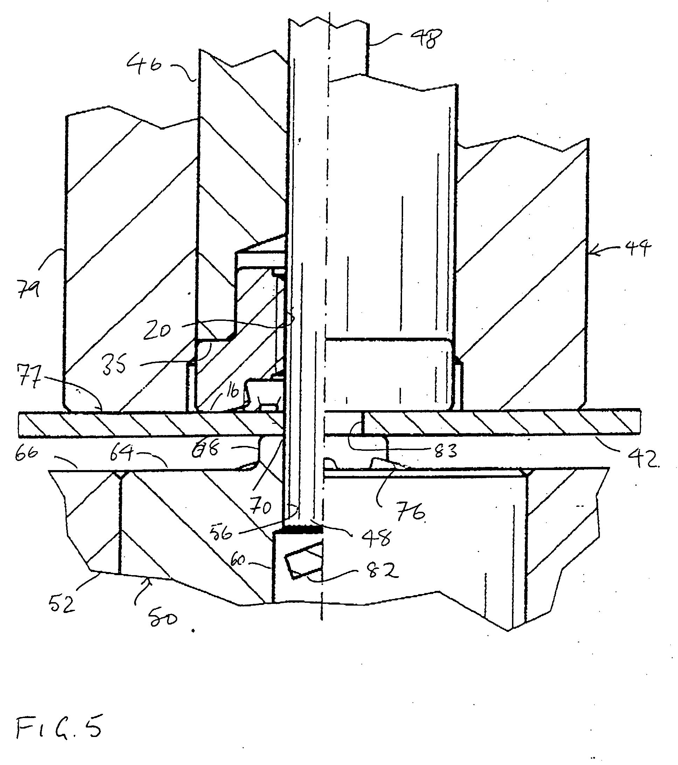

Nach den Fig. 1 und 2 besteht das Hohlkörperelement 10 aus einem im wesentlichen zylinderförmigen Körper aus Metall, mit einer Stirnfläche 12 welche nach der Anbringung des Elementes an einem plattenförmigen Bauteil diesem zugewandt ist. Die Stirnfläche 12 weist eine ringförmige Vertiefung 14 auf welche innerhalb einer erhabenen ringförmigen Anlagefläche 16 angeordnet ist, wobei die Bodenfläche 18 der ringförmigen Vertiefung sich bis zu der Bohrung 20 des Hohlkörperelementes 10 erstreckt. Die Bohrung 20 weist eine mittlere Achse 22 die zugleich die Längsachse des Hohlkörperelementes darstellt, auf und ist hier als eine Gewindebohrung mit Gewinde 24 ausgebildet, so daß das hier gezeigte Hohlkörperelement ein Mutterelement ist.

Die Bodenfläche 18 der ringförmigen Vertiefung 14 geht über eine Ringschulter 26 in eine Ringfläche 28 über wobei der Außendurchmesser der Ringfläche 28 geringfügig größer ist als der Außendurchmesser D des in der Bohrung 20 vorgesehenen Gewindes 24. Man merkt, daß die Bohrung 20 bzw. das Gewinde 24, die Ringläche 28, die Ringschulter 26 und die ringförmige Vertiefung 14 sowie auch die Anlagefläche 12 koaxial zur mittleren Achse 22 des Hohlkörperelementes 10 liegen. Die weitere Stirnfläche 30 des Hohlkörperelementes ist in diesem Beispiel flach ausgebildet und lediglich mit einer kleinen Versenkung 32 versehen, welche einen sauberen Übergang zum Gewinde 24 bildet.

Die abgestuft ausgebildete Mantelfläche 34 des Hohlkörperelementes geht über einen kleinen Radius 36 in die Stirnfläche 12 über, wobei dieser Radius 36 vorzugsweise kleiner als 0,5 mm beispielsweise 0,3 mm ausgeführt ist.

In der ringförmigen Anlagefläche sind in diesem Beispiel acht Vertiefungen 38 vorgesehen, welche, wie aus der Fig. 2 ersichtlich, in etwa keilförmig ausgestaltet sind und ihre größte Tiefe beim Übergang in die Seitenwand 15 der ringförmigen Vertiefung 14 aufweisen. In Draufsicht sind die Vertiefungen 38 in etwa rechteckig wie aus der Fig. 1 ersichtlich. Diese Vertiefungen werden beim Kaltschlagen während der Herstellung des Mutterelementes erzeugt und die entsprechende Verformung des Hohlkörperrohlings führt zu wulstartigen Vorsprüngen 40 in der Seitenwand der ringförmigen Vertiefung 14 wobei diese Vorsprünge wie auf der linken Seite der Fig. 2 deutlich zu sehen zu lokalen Hinterschneidungen 41 in der Seitenwand der ringförmigen Vertiefung 14 führen.

Als Werkstoffe für die Hohlkörperelemente eignen sich alle Materialien, die im Rahmen der Kaltverformung die Festigkeitswerte der Klasse 8 gemäß Isostandard erreichen, beispielsweise eine 35 B2-Legierung gemäß DIN 1654. Die so gebildeten Hohlkörperelemente bzw.. Mutterelemente eignen sich unter anderem für alle handelsüblichen Stahlwerkstoffe für ziehfähige Blechteile wie auch für Aluminium oder Magnesium oder deren Legierungen. Die Muttern können auch in anderen Werkstoffen ausgebildet werden, beispielsweise in einer Aluminiumlegierung, insbesondere in einer Aluminiumlegierung höherer Festigkeit.

Es versteht sich, daß in der Fig. 2 die Ausbildung des Mutterelementes auf der rechten Seite der mittleren Achse 22 identisch ist wie auf der linken Seite.

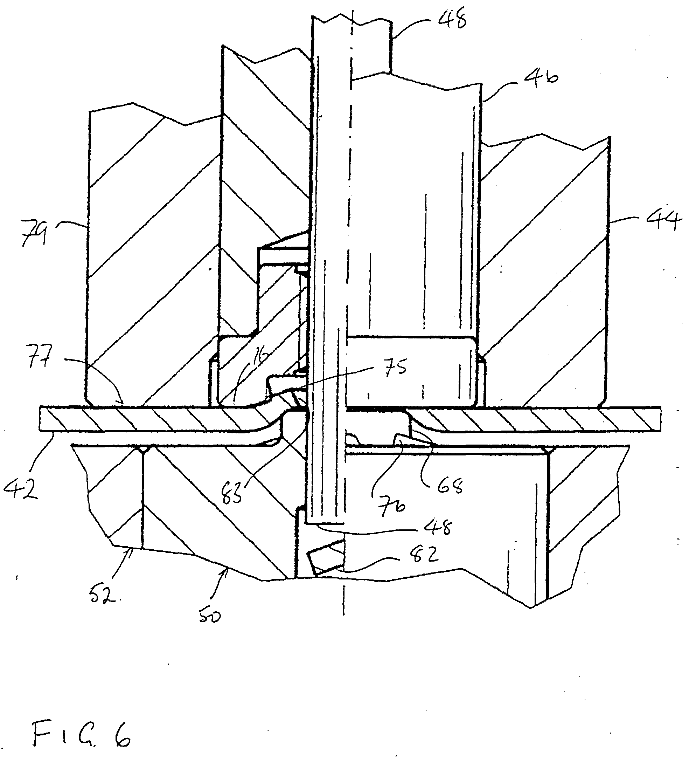

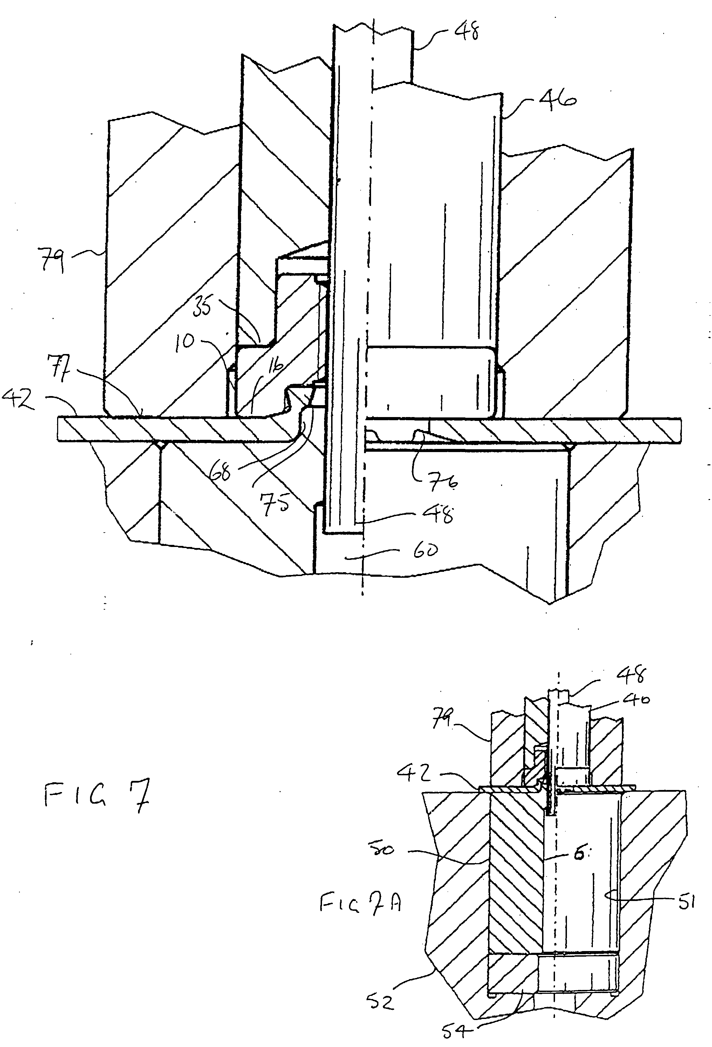

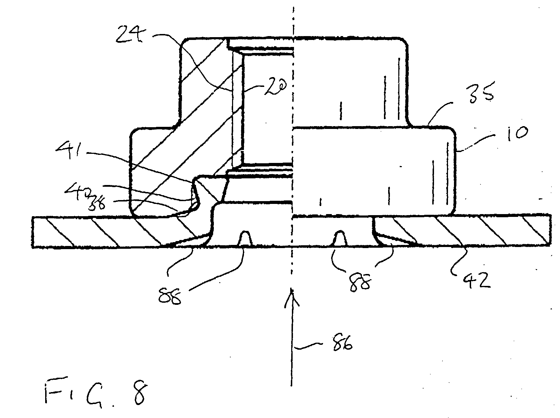

Die Art der Anbringung des Hohlkörperelementes nach den Fig. 1 und 2 in ein plattenförmiges Bauteil in Form eines Blechteils 42 wird nachfolgend anhand der Fig. 3 bis 8 näher erläutert.

In der Fig. 3 wird das erfindungsgemäße Hohlkörperelement 10 in einem nur teilweise dargestellten Setzkopf 44 gezeigt, der einen Stempel 46 sowie einen koaxial zum Stempel 46 angeordneten Lochstempel 48 aufweist. Ein Setzkopf dieser Art ist für sich im Prinzip aus den oben erwähnten deutschen Druckschriften, d.h. DE-PS 34 46 978 und DE-OS 38 35 556.3 bekannt.

Unterhalb des Blechteiles 42 befindet sich eine Matrize 50 welche, wie in der Fig. 7A dargestellt beispielsweise als zylindrisches Bauteil in einer zylindrischen Bohrung 51 eines unteren Werkzeuges 52 einer Presse eingesetzt ist und in der richtigen Höhe bündig mit der Oberfläche des unteren Werkzeuges 52 mittels eines Abstandhalters 54 gehalten wird. Die Matrize 50 weist eine mittlere Bohrung 56 auf die über eine Ringschulter 58 in eine größere Bohrung 60 übergeht. Das Stirnende 62 der Matrize 50 weist eine ebene Fläche 64 auf welche bündig mit der Oberfläche 66 des unteren Werkzeuges 52 liegt. Weiterhin weist das Stirnende der Matritze 50 einen Formlochabsatz 68 auf. Die Bohrung 56, welche das Loch des Formlochabsatzes 68 bildet, hat eine ringförmige Schneidkante 70, der einen Innendurchmesser aufweist, der dem der Bohrung des Hohlkörperelementes entspricht. Die zur Längsachse 22 koaxial angeordnete Stirnfläche 72 welche zumindest im wesentlichen senkrecht zu dieser Achse liegt, weist am Übergang zu der Mantelfläche des Formlochabsatzes 68 eine gerundete Ziehkante 74 auf.

Um das Formloch in Abständen herum angeordnet befinden sich mehrere Nasen 76, wobei in diesem Beispiel sechs solcher Nasen vorgesehen sind, die gleichmäßig um den Formlochabsatz 68 herum angeordnet sind. Die Nasen 76 haben eine Schrägfläche 78 und sind sowohl an der Mantelfläche des Formlochabsatzes 68 wie auch der ebenen Stirnfläche 64 der Matrize 50 erhaben ausgebildet.

Die Nasen 76, die insgesamt an allen Flächen gerundet sind, sind etwas schmäler ausgebildet als die Vertiefungen 38 in der ringförmigen Anlagefläche 16 des Mutterelementes 10. Durch die Verwendung der gleichen Bezugszeichen 22 wird deutlich gemacht, daß der Lochstempel 48, der Stempel 46, die untere Stirnfläche 77 des Setzkopfes, das Hohlelement 10 und die Matrize 50 des unteren Werkzeuges 52 wie auch die Bohrung 56 und die Bohrung 60 der Matrize und schließlich auch der Durchgangsbohrung des Abstandshalters 54 alle koaxial angeordnet sind.

Der Setzkopf 44 selbst ist in an sich bekannter Weise an dem oberen Werkzeug einer Presse angeordnet und wird, in der üblichen Art und Weise so ausgestaltet, daß die jeweiligen Mutterelemente 10 über einen Schrägkanal in die Bohrung 80 des Setzkopfes 44 gelangen und anschließend mittels des Stempels 46 beim Schließen der Presse bis zu dem Stirnende des Setzkopfes geführt werden. Die Mutterelemente können auch während dieser Bewegung gehalten werden wofür Vorrichtungen bekannt sind, beispielsweise aus der PCT-Anmeldung mit der Veröffentlichungsnummer WO 93/19890.

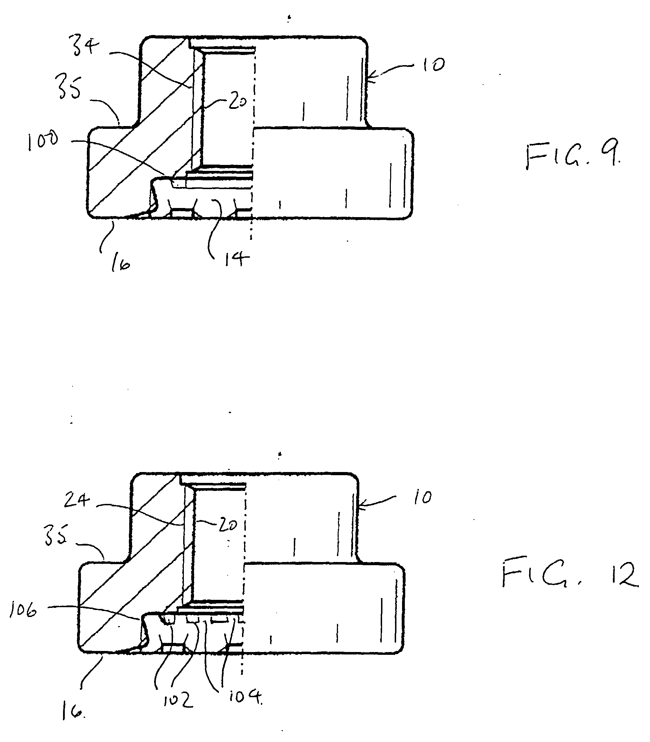

Beim Schließen der Presse, beispielsweise zur Formgebung des Blechteils durch das untere Werkzeug 52 in Kombination mit einem oberen nicht gezeigten Werkzeug, bewegt sich der Setzkopf aus der Stellung der Fig. 3 in die Stellung nach Fig. 4. Das untere Stirnende 77 des Setzkopfes 44 gelingt auf diese Weise in Anlage an das Blechteil 42 und dieses wird wiederum gegen die Stirnfläche 72 der Matrize 50 gepreßt. Eine weitergehende Bewegung des Gehäuses 79 des Setzkopfes nach unten wird in diesem Stadium verhindert, das Gehäuse 79 des Setzkopfes weicht gegenüber dem nach unten sich bewegenden Werkzeug der Presse etwas zurück. Dies gilt auch für den Stempel 46, der vorteilhafterweise gegen die Ringschulter 35 des Hohlkörperelementes drückt und nicht gegen die Stirnfläche 31, wodurch die Gefahr der Beschädigung des Gewindes 34 wirksam vermieden wird. Das obere Werkzeug der Presse treibt aber den Lochstempel weiter nach unten zunächst in die Stellung nach der Fig. 5. Dabei wird vom Lochstempel 48 in Zusammenarbeit mit der Schneidkante 70 des Formlochabsatzes 68 der Matrize 50 ein Butzen 82 aus dem Blechteil 42 geschnitten, wie in der Folgezeichnung der Fig. 5 dargestellt ist. Auf diese Weise entsteht ein Stanzloch 83 im Blechteil 42. Aus dieser Zeichnung merkt man, daß der Lochstempel 48 gleitend in die Bohrung 56 der Matrize 50 wie auch in der Bohrung 20 des Hohlkörperelementes 10 aufgenommen wird.

Der Butzen 82 kann durch die Bohrung 60 der Matrize 50 entsorgt werden, wobei der große Durchmesser dieser Bohrung 60 im Vergleich zu der Bohrung 56 dafür sorgt, daß der Butzen sich unter Schwerkraft leicht bewegt und nicht hängenbleibt.

Bei der weiteren Schließbewegung der Presse wird, wie in Fig. 6 gezeigt auch das Gehäuse 79 des Setzkopfes 44 und der Stempel 46 gemeinsam weiter nach unten bewegt, wodurch der Formlochabsatz 68 oder genauer gesagt die gerundete Ziehkante 74 des Formlochabsatzes einen Kragen 75 aus dem Blechwerkstoff um das Stanzloch 83 herum unter Aufweitung des Stanzloches ausbildet. Diese Verformung setzt sich bis zum Endstadium wie in der Fig. 7 gezeigt, fort und man sieht aus der Fig. 7 das der Formlochabsatz 68 das Blechmaterial bzw. den Kragen 75 so verformt hat, daß diese formschlüssig in der ringförmigen Vertiefung 14 des Hohlkörperelementes und in den Hinterschneidungen 40 hineingepreßt wird.

Durch die unterschiedliche Zahl der Nasen 46, im Vergleich zu der Zahl der Vertiefungen 38 in der ringförmigen Anlagefläche 16 des Hohlkörperelementes wird sichergestellt, daß mindestens eine Nase vollständig mit einer Vertiefung 38 zur Deckung kommt und zwar ohne daß Maßnahmen getroffen werden müssen, um die Drehposition des Hohlkörperelementes um die mittlere Achse 22 herum sicherzustellen. Auch bei anderen Vertiefungen 38 kann mit einer zumindest teilweisen Deckung mit Nasen der Matrize gerechnet werden, so daß auch hier eine formschlüssige Anlage erfolgt, wodurch die Verdrehsicherung sichergestellt ist.

Nachdem die wulstartigen Vorsprünge 40, welche die Hinterschneidungen bilden, ebenfalls zu einer gewellten Oberfläche der Seitenwand der ringförmigen Vertiefung 14 führen liefert die formschlüssige Anlage des Blechteils an dieser Seitenwand ebenfalls einen bedeutenden Beitrag zu der Verdrehsicherheit der Verbindung.

Nach dem Verfahrensstand gemäß Fig. 7 öffnet sich die Presse wieder und das Werkstück 42 mit dem angebrachten Hohlkörperelement wird aus der Presse ausgestoßen bzw. aus der Presse entnommen und stellt sich dann so wie in Fig. 8 dargestellt dar. Man sieht aus der Fig. 8, daß der Innendurchmesser des Kragens 75 des Blechteiles 42 etwas größer ist als der Außendurchmesser des Gewindes 24, so daß das Blechteil die Einführung eines Bolzens nicht verhindern kann. Der in das Gewinde 24 passende Bolzen wird üblicherweise in Pfeilrichtung 86 der Fig. 8 eingeführt und dient üblicherweise dazu, ein zweites Blechteil an dem Blechteil 42 zu befestigen. Aus der Fig. 8 ist deutlich, daß eine beträchtliche ringförmige Anlagefläche vorliegt, so daß die Flächenpressung innerhalb von zulässigen vom Werkstoff abhängigen Grenzen ohne weiteres gehalten werden kann, und zwar auch bei einem Hohlkörperelement mit einem vergleichsweise kleinem Durchmesser. Die durch die Nasen 76 im Blechteil erzeugten Vertiefungen 88 sind auch in der Fig. 8 ersichtlich.

Obwohl die hier gezeigten Hohlkörperelemente alle eine kreiszylindrische Mantelfläche aufweisen, d. h. in Draufsicht einen kreisförmigen Querschnitt aufweisen, können durchaus auch andere Querschnittsformen, beispielsweise polygonalen oder ovalen oder Nuten aufweisenden Querschnittsformen zur Anwendung gelangen. Auch wird der Ausdruck ringförmig so verstanden, daß dies nicht nur Kreisringe, sondern auch von einer Kreisringform etwas abweichende Ringformen, wie beispielsweise ein Polygon umfaßt.

Auch die Seitenwand 41 der ringförmigen Vertiefung 14 kann sich als Polygon oder mehrseitige Figur darstellen.

Es sind verschiedene Ausführungsvarianten der Erfindung vorstellbar, von denen einige anhand der weiteren Fig. 9 bis 12 näher erläutert werden.

Bei der Ausführung gemäß Fig. 9 befindet sich ein ringförmiger Vorsprung 100 im Bodenbereich der ringförmigen Vertiefung 14. Diese ringförmige Vorsprung ist nicht als Pilotteil aufzufassen, da sie lediglich die Verwendung einer verringerten Gewinde bzw. eine Verkürzung der Höhe des Hohlkörperelementes ermöglicht aber sonst keine Funktion hat. Es wäre allerdings denkbar, diesen Vorsprung 100 mit Nasen und/oder Vertiefungen zu versehen, wobei bei Verformung des Blechteils gegen die Nasen und/oder Vertiefungen eine zusätzliche Verdrehsicherung erreichbar wäre. Eine solche Ausbildung mit Nasen 102 und Vertiefungen 104 ist der Fig. 12 zu entnehmen wobei hier die Hinterschneidung nicht durch die Ausbildung von lokalen Vertiefungen wie 38 in Fig. 1 sondern in Form einer insgesamt schräggestellten Seitenwand der ringförmigen Vertiefung 14 vorliegt, welche durch eine konusförmige umlaufende Vertiefung 106 der ringförmigen Anlagefläche erzeugt wird. Da bei der Fig. 12 Ausführung die eine Verdrehsicherung bildenden Vertiefungen 38 fehlen und die Seitenwand sich als geneigte Wand darstellt, bieten die Nasen 102, 104 die einzige Verdrehsicherungsmöglichkeit.

Bei der Ausführung gemäß Fig. 10 ist die ringförmige Anlagefläche 16 mit einer ringförmigen Vertiefung 108 versehen, welche beispielsweise einen halbkreisförmigen Querschnitt aufweist und an mehrere Umfangsstellen eingedrückt wird um auch hier wulstartige Vorsprünge 40 auszubilden, wie bei der Ausführung der Fig. 1. Bei Verwendung einer solchen profillierten Anlagefläche soll die Matrize eine entsprechende Profillierung aufweisen, damit das Blechteil bündig an der gesamten Anlagefläche anliegt.

Die ringförmige Vertiefung 108 kann auch in der Art und Weise ausgebildet werden, wie in der Fig. 11 gezeigt, d. h. als gewellte ringförmige Vertiefung in Draufsicht betrachtet. Wenn die Matrize eine hierzu komplementäre Form aufweist, wird durch diese ringförmige Vertiefung die erforderliche Verdrehsicherung sichergestellt.

Diese ringförmige Vertiefung kann auch so ausgeführt werden, daß die innere Seitenwand der ringförmigen Vertiefung 14 Vorsprünge 40 bekommt, die auch Hinterschneidungen bilden die zur Erzeugung des erforderlichen Auspreßwiderstandes dienen und auch eine zusätzliche Verdrehsicherung bieten.

Ein besonderer Vorteil des erfindungsgemäßen Hohlkörperelementes liegt darin, daß ein Hohlkörperelement mit Blechen verschiedener Dicken verwendet werden kann beispielsweise Bleche im Bereich von 0,75 mm bis zu 2,25 mm. Es ist lediglich erforderlich, die passende Matrize zu verwenden wobei bei dünneren Blechen der Formlochabsatz einen größeren Durchmesser als bei dickeren Blechen aufweisen muß.

Es kann sich bei dem Hohlkörperelement um einen hohlen Körper handeln, der erst nach seiner Anbringung an ein Blechteil mit einem Gewinde versehen wird, bspw. durch eine selbstfurchende Schraube.

## Patentansprüche

1. Hohlkörperelement (10) beispielsweise Mutterelement zur Anbringung an ein plattenförmiges Bauteil (42) wobei an der an das Bauteil anzubringenden Stirnfläche (12) des Hohlkörperelements eine ringförmige Vertiefung (14) innerhalb einer erhabenen ringförmigen Anlagefläche (16) vorliegt und mindestens eine Hinterschneidung (41) in einer Seitenwand der Vertiefung (14) sowie Verdrehsicherungsmerkmale (38) vorgesehen sind,
dadurch **gekennzeichnet,**
daß die Bodenfläche (18) der ringförmigen Vertiefung (14) sich bis zur Bohrung (20) des Hohlkörperelementes erstreckte und zumindest im wesentlichen ohne ein Pilotteil in die Bohrung (20) übergeht.

2. Hohlkörperelement nach Anspruch 1,
dadurch **gekennzeichnet,**
daß zur Verdrehsicherung mehrere, vorzugsweise voneinander beabstandete Vertiefungen (38) in der ringförmigen Anlagefläche (16) vorhanden sind.

3. Hohlkörperelement nach Anspruch 1 oder 2,
dadurch **gekennzeichnet,**
daß an der Seitenwand der Vertiefung Erhebungen (40) vorgesehen sind, welche die Hinterschneidungen (41) bilden und zwar an Umfangsstellen, welche den Vertiefungen (38) in der ringförmigen Anlagefläche (16) entsprechen.

4. Hohlkörperelement nach einem der vorhergehenden Ansprüche,
dadurch **gekennzeichnet,**
daß ein umlaufende Vertiefung (108), insbesondere im Querschnitt etwa halbkreisförmige Vertiefung in der ringförmigen Anlagefläche (16) vorgesehen ist, wobei vorzugsweise die umlaufende Vertiefung (108) in Draufsicht wellenförmig ist.

5. Hohlkörperelement nach einem der vorhergehenden Ansprüche,
dadurch **gekennzeichnet,**
daß eine ringförmige Erhebung (100) radial innerhalb der ringförmigen Vertiefung (14) an dessen Bodenfläche (18) und konzentrisch zur Bohrung (20) des Hohlkörperelementes (10) vorgesehen ist, wobei diese Erhebung (100) gegebenenfalls zur Verdrehsicherung von einander beabstandeten Nasen und/oder Vertiefungen aufweist und/oder daß die ringförmige Vertiefung (14) über eine Ringschulter (26) in eine tiefer gelegene Ringfläche (28) übergeht deren Durchmesser etwas größer ist als der Außendurchmesser der als Gewinde (24) ausgebildeten, zu der tiefer gelegenen Ringfläche koaxial angeordneten Bohrung (20) des Mutterelementes.

6. Hohlkörperelement nach einem der vorhergehenden Ansprüche,
dadurch **gekennzeichnet,**
daß die Mantelfläche (34) über einen Radius (36) in die ringförmige Anlagefläche (16) übergeht, wobei der Radius kleiner als 0,5 mm ausgebildet ist, und/oder daß die Mantelfläche (34) des Hohlkörperelementes abgestuft ist wodurch das Hohlkörperelement (10) an dem die ringförmige Anlagefläche (16) aufweisenden Ende breiter ist als am entgegengesetzten Ende, wobei die Mantelfläche vorzugsweise eine Ringschulter (35) aufweist.

7. Matrize (50) zur Anwendung mit einem Hohlkörperelement (10) nach einem der Ansprüche 1 bis 6,
wobei
die Matrize (50) eine Stirnfläche (62) aufweist mit mindestens einem von einer zumindest im wesentlichen ebenen Fläche hervorstehenden Formlochabsatz (68) und mit um diesen Absatz herum und im Bereich des Überganges in die ebene Fläche (64) angeordneten Nasen (76) die sich erheben sowohl an der Mantelfläche des Absatzes (68) als auch an der ebenen Fläche (64) ausgebildet sind, wobei das Loch (56) des Formlochabsatzes eine ringförmige Schneidkante (70) aufweist mit einem Innendurchmesser welcher dem Innendurchmesser der Bohrung des Hohlkörperelementes (10) entspricht, und wobei an dem Übergang von der Stirnfläche des Formlochabsatzes zur Mantelfläche desselben eine gerundete Ziehkante (74) vorgesehen ist.

8. Verfahren zur Anbringung eines Hohlkörperelementes, insbesondere eines Hohlkörperelementes nach einem der Ansprüche 1 bis 6, an ein plattenförmiges, plastisch verformbares Bauteil bzw. Blechteil (42), wobei an einer dem Bauteil zugewandten Stirnfläche (12) des Hohlkörperelementes (10) eine ringförmige Vertiefung (14) innerhalb einer erhabenen ringförmigen Anlagefläche (16) vorliegt, wobei mindestens eine Hinterschneidung (41) in einer Seitenwand der Vertiefung (14) sowie Verdrehsicherungsmerkmale (38) vorgesehen sind und die Bodenfläche (18) der ringförmigen Vertiefung (14) zumindest im wesentlichen ohne ein Pilotteil sich bis zur Durchgangsbohrung erstreckt,
dadurch **gekennzeichnet,**
daß das Hohlkörperelement (10) in einen Setzkopf (44) eingesetzt wird, der einen gegenüber dem Setzkopf (44) vertikal beweglichen Lochstempel (48) aufweist, der durch die Bohrung (20) des Hohlkörperelementes (10) beweglich ist, daß eine Matrize (50) auf der dem Setzkopf (44) abgewandten Seite des plattenförmigen Bauteils (42) koaxial zum Hohlkörperelement (10) und zum Lochstempel (46) angeordnet wird und mindestens einen von einer zumindest im wesentlichen ebenen Fläche (64) hervorstehenden Formlochabsatz (68) und um diesen Absatz (68) herum und im Bereich des Überganges in die ebene Fläche (64) angeordneten Nasen (76) die sich erhaben sowohl an der Mantelfläche des Absatzes (68) als auch an der ebenen Fläche (64) ausgebildet sind, aufweist, wobei das Loch (56) des Formlochabsatzes (68) eine ringförmige Schneidkante (70) aufweist mit einem Innendurchmesser welcher dem Innendurchmesser der Bohrung des Hohlkörperelementes entspricht und an dem Übergang von der Stirnfläche zur Mantelfläche des Formlochabsatzes (68) eine gerundete Ziehkante (74) vorgesehen ist, daß der Lochstempel (48) während der Schließbewegung des Setzkopfes (44) durch das Bauteil in das Loch (56) der Matrize (80) zum Ausstanzen eines Butzens (82) hindurchgetrieben wird und daß anschließend mittels der Matrize (50) einen Kragen (75) um das Stanzloch (83) herum ausgebildet und das Stanzloch (83) aufgeweitet wird, und daß in der Abschlußphase der Schließbewegung des Setzkopfes (44) der so ausgebildete Kragen (75) durch die Matrize (80) formschlüssig an die Seitenwand und in die ringförmige Vertiefung (14) der Stirnfläche des Hohlkörperelementes zur Anlage gebracht und das Bauteil (42) an die Anlagefläche (16) gepreßt und in die Vertiefungen (38) der Anlagefläche (16) eingeformt wird.

9. Zusammenbauteil bestehend aus einem Hohlkörperelement (10) nach einem der Ansprüche 1 bis 6 und einem plattenförmigen Bauteil (42) das mit dem Hohlkörperelement (10) verbunden ist, wobei das plattenförmige Bauteil (42) zumindest im wesentlichen vollflächig auf der Anlagefläche (16) des Hohlkörperelementes (10) anliegt und einen Kragen (75) aufweist, der an seiner radial äußeren Fläche zumindest zum Teil hinter den Hinterschneidungen (41) in der Seitenwand der ringförmigen Vertiefung (14) des Hohlkörperelements (10) bündig an diesem anliegt und ein Loch aufweist, dessen kleinster Durchmesser zumindest im wesentlichen so groß ist, wie der Durchmesser der Bohrung (20) des Hohlkörperelementes (10) bzw. der Außendurchmesser eines in dieser Bohrung ausgebildeten Gewindes (24).

10. Zusammenbauteil nach dem Anspruch 9,
dadurch **gekennzeichnet,**
daß in der Oberfläche des plattenförmigen Bauteiles (42) welche vom Hohlkörperelement (10) abgewandt ist, im Bereich des Überganges zu dem Kragenteil mehrere Vertiefungen (88) vorgesehen sind, wobei wahlweise die Anzahl der Vertiefungen (88) in der dem Hohlkörperelement (10) abgewandten Fläche des plattenförmigen Bauteiles (42) im Bereich des Überganges zum Kragen (42) sich in der Zahl unterscheiden von der Anzahl der zur Verdrehsicherung vorgesehenen Vertiefungen (38) in der ringförmigen Anlagefläche (16) des Hohlkörperelementes (10).

## Claims

1. Element (10) having a hollow body, for example nut element, for the attachment to a plate-like component (42), wherein a ring-shaped recess (14) within a raised ring-like contact surface (16) is present at the end face (12) of the hollow element to be attached to the component, and wherein at least one undercut (41) is provided in a side wall of the recess (14) as well as features (38) providing security against rotation, characterized in that the base surface (18) of the ring-like recess (14) extends up to the bore (20) of the hollow element and merges into the bore (20) at least substantially without a pilot portion.

2. Element having a hollow body in accordance with claim 1, characterized in that a plurality of preferably spaced apart recesses (38) are present in the ring-like contact surface (16) for the security against rotation.

3. Element having a hollow body in accordance with claim 1 or claim 2, characterized in that raised portions (40) are provided at the side wall of the recess, which form the undercuts (41), and indeed at circumferential positions which correspond to the recesses (38) in the ring-like contact surface (16).

4. Element having a hollow body in accordance with one of the preceding claims, characterized in that an encircling recess (108), in particular a recess which is approximately semicircular in cross-section, is provided in the ring-like contact surface (16), with the encircling recess (108) preferably being wave-shaped in plan view.

5. Element having a hollow body in accordance with one of the preceding claims, characterized in that a ring-like raised portion (100) is provided radially within the ring-like recess (14) at its base surface (18) and concentric to the bore (20) of the hollow element (10), with this raised portion (100) optionally having mutually spaced apart noses and/or recess for the security against rotation, and/or in that the ring-like recess (14) merges via a ring-shoulder (26) into a deeper disposed ring-surface (28), the diameter of which is somewhat larger than the outer diameter of the bore (20) of the nut element disposed coaxially to the deeper disposed ring surface and formed as a thread (24).

6. Element having a hollow body in accordance with one of the preceding claims, characterized in that the jacket surface (34) merges via a radius (36) into the ring-like contact surface (16), with the radius being made smaller than 0.5 mm, and/or in that the jacket surface (34) of the hollow element is stepped, whereby the hollow element (10) is broader at the end having the ring-like contact surface (16) than at the opposite end, with the jacket surface preferably having a ring shoulder (35).

7. Die button (50) for use with an element (10) having a hollow body in accordance with one of the claims 1 to 6, wherein the die button (50) has an end face (62) with at least one hole forming punch projection (68) projecting from an at least substantially planar surface and with noses (76) arranged around this projection and in the region of the transition into the planar surface (64), with the noses being raised both at the jacket surface of the projection (68) and also at the planar surface (64), wherein the hole (56) of the hole forming punch projection has a ring-like cutting edge (70) with an inner diameter corresponding to the inner diameter of the bore of the hollow element (10), and wherein a rounded drawing edge (74) is provided at the transition from the end face of the hole forming punch projection to the jacket surface.

8. Method for the attachment of an element having a hollow body, in particular of a hollow element in accordance with one of the claims 1 to 6, to a plate-like, plastically deformable component or sheet metal part (42), wherein a ring-shaped recess (14) within a raised ring-like contact surface (16) is present at the end face (12) of the hollow element facing the component, and wherein at least one undercut (41) is provided in a side wall of the recess (14) as well as features (38) providing security against rotation, and wherein the base surface (18) of the ring-like recess (14) extends up to the through-bore, at least substantially without a pilot portion, characterized in that the hollow element (10) is inserted in a setting head (44) which has a hole punch (48) vertically movable relative to the setting head (44), and movable through the bore (20) of the hollow element (10), in that a die button (50) is arranged at the side of the plate-like component (42) remote from the setting head (44) coaxial to the hollow element (10) and to the hole punch (46) and has at least one hole forming punch projection (68) projecting from at least substantially planar surface (64) and noses arranged around this projection (68) and in the region of the transition into the planar surface (64), which are raised both at the jacket surface of the projection (68) and also at the planar surface (64), with the hole (56) of the hole forming punch projection (68) having a ring-like cutting edge (70) with an inner diameter which corresponds to the inner diameter of the bore of the hollow element, and a rounded drawing edge (74) provided at the transition from the end face to the jacket surface of the hole forming punch projection (68); in that the hole punch (48) is driven during the closing movement of the setting head (44) through the component into the hole (56) of the die button (80) for the punching out of a slug (82), and in that a collar (75) is subsequently formed around the punched hole (83) by means of the die button (50), and the punched hole (83) is broadened out, and in that, in the closing phase of the closing movement of the setting head (44), the so formed collar (75) is brought by the die button (80) into form-fitted contact against the side wall and into the ring-like recess (14) of the end face of the hollow element, and the component (42) is pressed against the contact surface (16) and formed into the recesses (38) of the contact surface (16).

9. Component assembly comprising an element (10) having a hollow body in accordance with one of the claims 1 to 6, and a plate-like component (42), which is connected to the hollow element (10), with the plate-like component (42) contacting the contact surface (16) of the hollow element (10) at least substantially over its full area and having a collar (75) which lies, at its radial outer surface, at least partly behind the undercuts (41) in the side wall of the hollow part (10) flush in contact with the latter, and has a hole, the smallest diameter of which is at least substantially as large as the diameter of the bore (20) of the hollow element (10) or of the outer diameter of a thread (24) formed in this bore.

10. Component assembly in accordance with claim 9, characterized in that a plurality of recesses (88) are provided in the surface of the plate-like component (42) remote from the hollow element (10) in the region of the transition to the collar part, with the number of recesses (88) in the surface of the plate-like component (42) remote from the hollow element (10) in the region of the transition to the collar (42) optionally differing in number from the number of the recesses (38) in the ring-like contact surface (16) of the hollow element (10) provided for the security against rotation.

## Revendications

1. Elément formant un corps creux (10) par exemple élément écrou destiné à être mis en place sur une pièce constitutive (42) en forme de plaque, une cavité (14) de forme annulaire étant présente sur la surface frontale (12) de l'élément formant un corps creux qui doit être mise en place sur la pièce constitutive, à l'intérieur d'une surface d'appui (16) relevée de force annulaire, et au moins une contre-dépouille (41) étant prévue dans une paroi latérale de la cavité (14), ainsi qu'à l'intérieur des caractéristiques de sécurité anti-rotation (38),
caractérisé en ce que
la surface de fond (18) de la cavité (14) de forme annulaire s'étend jusqu'à l'alésage (20) de l'élément formant un corps creux et se raccorde à l'alésage (20) au moins sensiblement sans partie pilote.

2. Elément formant un corps creux selon la revendication 1,
caractérisé en ce que
en vue de la sécurité anti-rotation, plusieurs cavités (38) situées de préférence à distance les unes des autres sont présentes dans la surface d'appui de forme annulaire (16).

3. Elément formant un corps creux selon la revendication 1 ou 2,
caractérisé en ce que
sont prévues sur la paroi latérale de la cavité, des proéminences (40) qui forment les contre-dépouilles (41) et ceci à des emplacements périphériques qui correspondent aux cavités (38) pratiquées dans la surface d'appui (16) de forme annulaire.

4. Elément formant un corps creux selon l'une des revendications précédentes,
caractérisé en ce que
une cavité (108) périphérique, en particulier une cavité de section transversale approximativement en forme de demi-cercle est prévue dans la surface d'appui annulaire (16), la cavité périphérique (108) ayant de préférence une forme ondulée vue en plan par le dessus.

5. Elément formant un corps creux selon l'une des revendications précédentes,
caractérisé en ce que
une proéminence (100) de forme annulaire est prévue radialement à l'intérieur de la cavité (14) de forme annulaire, sur la surface de base (18) de celle-ci et concentriquement à l'alésage (20) de l'élément formant un corps creux (10), cette proéminence (100) présentant le cas échéant, en vue de la sécurité anti-rotation, des dents et/ou des cavités situées à distance les uns des autres et/ou en ce que la cavité (14) de forme annulaire se raccorde, par l'intermédiaire d'un épaulement annulaire (26) en une surface annulaire (28) située plus profondément, dont le diamètre est un peu supérieur au diamètre extérieur de l'alésage (20) configuré en taraudage (24), disposé coaxialement à la surface annulaire située plus profondément, de l'élément écrou.

6. Elément formant un corps creux selon l'une des revendications précédentes,
caractérisé en ce que
la surface d'enveloppe (34) se raccorde par un rayon (36) à la surface d'appui (16) de forme annulaire, le rayon étant inférieur à 0,5 mm et/ou en ce que la surface d'enveloppe (34) de l'élément formant un corps creux est étagée, ce pour quoi l'élément formant corps creux (10) est plus large à l'extrémité présentant la surface d'appui annulaire (16) qu'à l'extrémité opposée, la surface d'enveloppe présentant de préférence un épaulement annulaire (35).

7. Matrice (50) destinée à être utilisée avec un élément formant un corps creux (10) selon l'une des revendications 1 à 6, la matrice (50) présentant une surface frontale (62) comportant au moins un gradin à trou (68) faisant saillie sur une surface sensiblement plane ainsi que des dents (76) disposées autour de ce gradin à trou et dans la zone de transition vers la surface plane (64), lesquelles dents font saillie aussi bien sur la surface d'enveloppe du gradin à trou (68) que sur la surface plane (64), le trou (56) du gradin à trou présentant une arête coupante (70) annulaire ayant un diamètre intérieur qui correspond au diamètre intérieur de l'alésage de l'élément formant un corps creux (10) et un bord d'étirage (74) arrondi étant prévu dans la zone de transition entre la surface frontale du gradin à trou et la surface d'enveloppe de celui-ci.

8. Procédé pour la mise en place d'un élément formant un corps creux, en particulier un élément formant un corps creux selon l'une des revendications 1 à 6, sur une pièce constitutive ou pièce de tôle (42) en forme de plaque, déformable plastiquement, une cavité annulaire (14) étant présente sur une surface frontale (12) de l'élément formant un corps creux (10) orientée vers la pièce constitutive, au moins une contre-dépouille (41) étant prévue sur une paroi latérale de la cavité (14), ainsi que des caractéristiques de sécurité anti-rotation (38) et la surface du fond de la cavité (14) s'étendant au moins sensiblement sans partie pilote jusqu'à l'alésage traversant ;
caractérisé en ce que
l'élément formant un corps creux (10) est mis en place dans une tête de mise en place (44) qui présente un poinçon (48) mobile verticalement par rapport à la tête de mise en place (44), lequel poinçon peut être déplacé dans l'alésage (20) de l'élément formant un corps creux (10), en ce qu'une matrice (50) est disposée sur la face, située à l'opposé de la tête de mise en place (44), de la pièce constitutive (42) en forme de plaque, coaxialement à l'élément formant un corps creux (10) et au poinçon (46), et présente au moins un gradin à trou (68) qui fait saillie à partir d'une surface (64) au moins sensiblement plane et des dents (76) disposées autour de ce gradin à trou (68) et dans la zone de transition vers la surface plane (64), qui s'élèvent aussi bien sur la surface d'enveloppe que sur la surface plane (64), le trou (56) du gradin à trou (68) présentant une arête coupante (70) de forme annulaire ayant un diamètre intérieur qui correspond au diamètre intérieur de l'alésage de l'élément formant un corps creux et un bord d'étirage arrondi (74), étant prévu sur la zone de transition entre la surface frontale et la surface d'enveloppe du gradin à trou (68), en ce que le poinçon (48) est entraîné pendant le mouvement de fermeture de la tête de mise en place (44) par la pièce constitutive dans le trou (56) de la matrice (80) en vue de la découpe d'un rond (82) et en ce qu'ensuite un col (75) est formé au moyen de la matrice (50) autour du trou découpé (83) et que le trou découpé (83) est élargi et en ce que dans la phase terminale du mouvement de fermeture de la tête de mise en place (44), le col (75) ainsi conformé est amené par la matrice (80) en appui avec complémentarité de forme contre la paroi latérale et dans la cavité annulaire (14) de la surface frontale de l'élément formant un corps creux et la pièce (42) est poussée contre la surface d'appui (16), est mise en forme dans les cavités (38) de la surface d'appui (16).

9. Assemblage composé d'un élément formant un corps creux (10) selon l'une des revendications 1 à 6 et d'une pièce constitutive (42) en forme de plaque, qui est reliée à l'élément formant un corps creux (10), la pièce constitutive (42) en forme de plaque s'appuyant au moins sensiblement par toute sa surface sur la surface d'appui (16) de l'élément formant un corps creux (10) et présentant un col (75) qui s'appuie étroitement par sa surface radialement extérieure au moins partiellement en arrière des contre-dépouilles (41) de la paroi latérale de la cavité annulaire (14) de l'élément formant un corps creux (10), sur celui-ci, et présente un trou dont le plus petit diamètre est au moins sensiblement égal au diamètre de l'alésage (20) de l'élément formant un corps creux (10) ou au diamètre extérieur d'un filetage (24) formé dans cet alésage.

10. Assemblage selon la revendication 9,
caractérisé en ce que plusieurs cavités (88) sont prévues dans la surface de la pièce constitutive en forme de plaque (42) qui est située à l'opposé de l'élément formant un corps creux (10), dans la zone de la transition vers la pièce formant un col, le nombre des cavités (88) présentes dans la surface de la pièce constitutive en forme de plaque (42) dans la zone de la transition vers le col (75) pouvant, suivant le choix, être différent du nombre de cavités (38) de sécurité anti-rotation prévues dans la surface d'appui (16) de l'élément formant un corps creux (10) .
